# EUROPÄISCHE PATENTSCHRIFT

(11) **EP 3 403 055 B1**
(45) Veröffentlichungstag und Bekanntmachung des Hinweises auf die Patenterteilung: **06.01.2021**
(21) Anmeldenummer: 16801385.2
(22) Anmeldetag: 22.11.2016
(51) Int. Cl.: G01D 5/26

(54) **SYSTEM, UMFASSEND EIN ERSTES TEIL UND EIN ZWEITES TEIL**
SYSTEM COMPRISING A FIRST PART AND A SECOND PART
SYSTÈME COMPRENANT UNE PREMIÈRE PARTIE ET UNE SECONDE PARTIE

(30) Priorität: 14.01.2016 DE 102016000224
(43) Veröffentlichungstag der Anmeldung: 21.11.2018
(73) Patentinhaber: SEW-EURODRIVE GmbH & Co. KG, 76646 Bruchsal (DE)
(72) Erfinder: HUA, Zhidong, 76646 Bruchsal (DE); SCHMIDT, Josef, 76676 Graben-Neudorf (DE); SCHÄFER, Thomas, 76689 Neuthard (DE); WANJEK, Andreas, 68753 Waghäusel (DE)
(86) Internationale Anmeldenummer: PCT/EP2016/025152
(87) Internationale Veröffentlichungsnummer: WO 2017/121453

(56) Entgegenhaltungen:
- DE-U1- 29 700 341
- US-A1- 2006 056 855
- US-A1- 2010 166 433
- US-B1- 6 777 666

## Beschreibung

Die Erfindung betrifft ein System **zur Datenübertragung und Positionsbestimmung,** umfassend ein erstes Teil und ein zweites Teil.

Lichtleiter sind bekannt als Mittel zum Durchleiten von Licht. Ein seitliches Abstrahlen des Lichts wird verhindert durch möglichst glattes, also nicht raues Gestalten der Oberfläche des Lichtleiters, so dass infolge Totalreflexion ein möglichst großer Anteil des am ersten Ende des Lichtleiters eingeleiteten Lichts am anderen Ende wieder austritt.

**Aus der** DE 43 42 778 A1 **ist eine kontaktlose Datenübertragungsvorrichtung als nächstliegender Stand der Technik bekannt.**

**Aus der** DE 103 53 891 A1 **ist eine Anordnung zur Datenübertragung zwischen einem feststehenden und einem beweglichen Bauteil bekannt.**

**Aus der** US 2010 / 0166433 A1 **ist als nächstliegender Stand der Technik eine optische Signalübertragungsvorrichtung bekannt.**

**Aus der** GB 2 169 464 A **ist ein optisches Glasfaserübertragungssystem bekannt.**

**Aus der** US 2004 / 0184722 A1 **ist eine Vorrichtung für eine Breitbandübertragung von digitalen optischen Signalen zwischen beweglichen Einheiten bekannt.**

**Aus der** JP 2001308 798 A **ist ein optischer Lichtleiter mit seitlicher Leckage bekannt.**

**Aus der** US 2008 / 0186491 A1 **ist ein rotatorischer Geber bekannt.**

**Aus der** DE 10 2012 021 971 A1 **ist eine optische Messvorrichtung zur Ermittelung von Drehwinkeln an einem rotierenden Bauteil bekannt.**

**Aus der** EP 2 677 281 A1 **ist ein optoelektronisches Sensorelement bekannt.**

**Aus der** US 2006/056855 A1 **ist eine beleuchtende Kommunikationsanordnung bekannt.**

**Aus der** DE 297 00 341 U1 **ist eine Einrichtung zum berührungslosen Übertragen von Messwerten bekannt.**

Der Erfindung liegt daher die Aufgabe zugrunde, eine berührungslose Datenübertragung zu erreichen.

Erfindungsgemäß wird die Aufgabe bei dem System nach den in Anspruch 1 angegebenen Merkmalen gelöst.

Wichtige Merkmale der Erfindung bei dem System, umfassend ein erstes Teil und ein zweites Teil,
wobei das zweite Teil zum ersten Teil relativ bewegbar ist,
**wobei** das erste Teil einen seitlich Licht abstrahlenden Lichtleiter aufweist,
wobei das zweite Teil zumindest eine Sensoranordnung zur Detektion der Lichtintensität **aufweist.**

Dabei ist das in den Lichtleiter eingeleitete Licht einer Lichtquelle seitlich am Lichtleiter abstrahlbar und somit entlang der Erstreckung seitlich abstrahlbar. Auf diese Weise ist vom bewegbaren zweiten Teil Lichtintensität detektierbar und auf diese Weise berührungslos eine Datenübertragung ausführbar.

Dabei wird die Sensoranordnung bei dem Bewegen des zweiten Teils relativ zum ersten Teil entlang des Lichtleiters bewegt, so dass seitlich aus dem Lichtleiter abgestrahltes Licht auf die Sensoranordnung trifft. Dabei ist das zweite Teil entlang der Erstreckung des Lichtleiters bewegbar. Hierbei ist also die Erstreckung beispielsweise ein Kreis oder eine langgestreckte Bahnkurve, wie Linie oder Kreisbahn, **deren Bahnkurven-Durchmesser viel größer ist als der Querschnittsdurchmesser des Lichtleiters.** Auf diese Weise ist also während der Bewegung eine Datenübertragung berührungslos ausführbar und zusätzlich oder alternativ auch eine Positionsbestimmung ausführbar.

**Erfindungsgemäß** weist das erste Teil ein Gitter auf, welches zwischen der Sensoranordnung und dem Lichtleiter angeordnet ist. Von Vorteil ist dabei, dass die Gitteröffnungen regelmäßig beabstandbar sind und somit in der Anzahl der detektierten Lichtintensitätsmaxima während der Bewegung die zurückgelegte Wegstrecke bestimmbar ist. Durch unregelmäßig voneinander beabstandete Gitteröffnungen ist ein Identifikationscode erkennbar, der jeweils einen Positionsbereich codiert. Allerdings ist bei der Decodierung die Geschwindigkeit beziehungsweise der Geschwindigkeitsverlauf während der Bewegung entlang des Lichtleiters zu berücksichtigen, die somit auch bestimmt werden muss.

Bei einer vorteilhaften Ausgestaltung weist das Gitter in Erstreckungsrichtung des Lichtleiters insbesondere voneinander regelmäßig beabstandete Gitteröffnungen auf und/oder das Gitter weist ein erstes Polarisationsfilter auf, so dass das aus dem Gitter austretende, zur Sensoranordnung abgestrahlte Licht polarisiert ist, insbesondere eine einzige Polarisationsrichtung aufweist. Von Vorteil ist dabei, dass mittels der Polarisationsfilterung die Verdrehung des zweiten Teils gegen das erste Teil bestimmbar ist. Bei regelmäßiger Beabstandung der Gitteröffnungen ist die Position bestimmbar.

Bei einer vorteilhaften Ausgestaltung weist die Sensoranordnung einen ersten Sensor zur Bestimmung der Lichtintensität und einen zweiten Sensor zur Bestimmung der Lichtintensität auf,
wobei zwischen dem ersten Sensor und dem Gitter am zweiten Teil ein zweites Polarisationsfilter angeordnet ist,
wobei zwischen dem zweiten Sensor und dem Gitter am zweiten Teil ein drittes Polarisationsfilter angeordnet ist,
wobei die Polarisationsrichtung des zweiten Polarisationsfilters einen nicht verschwindenden Verdrehwinkel zur Polarisationsrichtung des dritten Polarisationsfilters aufweist, insbesondere einen Verdrehwinkel von 90°. Von Vorteil ist dabei, dass die Verdrehung des zweiten Teils gegen das erste Teil in einfacher Weise bestimmbar ist.

Bei einer vorteilhaften Ausgestaltung ist das erste, zweite und dritte Polarisationsfilter eben ausgeführt und die das erste, zweite und dritte Polarisationsfilter aufnehmenden Ebenen sind parallel zueinander ausgerichtet. Von Vorteil ist dabei, dass ein möglichst geringer Messfehler erreichbar ist.

Bei einer vorteilhaften Ausgestaltung weist die Sensoranordnung zusätzlich zu dem ersten und zweiten Sensor einen dritten Sensor zur Bestimmung der Lichtintensität auf,
wobei zwischen dem Lichtleiter und dem dritten Sensor kein Polarisationsfilter angeordnet ist. Von Vorteil ist dabei, dass zusätzlich zur Bestimmung der Verdrehung, also des relativen Drehwinkels des zweiten Teils gegen das erste Teil auch die Position entlang der Erstreckung des Lichtleiters bestimmbar ist. **Außerdem ist der dritte Sensor als zum Datenempfang für berührungslose Datenübertragung geeignet. Insbesondere weil mittels des dritten Sensors Lichtintensität bestimmbar ist, ist auch ein Datenempfang der berührungslos übertragenen, insbesondere lichtintensitätsmodulierten, Daten ausführbar.**

Erfindungsgemäß wird das in den Lichtleiter eingestrahlte Licht von einer steuerbaren Lichtquelle erzeugt, so dass die Intensität des in den Lichtleiter eingestrahlten Lichts gemäß einem von einer Datenquelle erzeugten Datenstroms moduliert ist. Von Vorteil ist dabei, dass das Licht in einfacher Weise modulierbar ist. Beispielsweise ist als steuerbare Lichtquelle eine LED verwendbar.

Bei einer vorteilhaften Ausgestaltung wird das vom dritten Sensor erzeugte Sensorsignal demoduliert von einer Auswerteeinheit, insbesondere von einem Modem, und einer Datensenke, insbesondere Signalelektronik, insbesondere Steuerung, des zweiten Teils zugeführt wird. Von Vorteil ist dabei, dass die unidirektionale Datenübertragung vom ersten Teil ans zweite Teil berührungslos ausführbar ist und die Decodierung in einfacher Weise erreichbar ist.

Bei einer vorteilhaften Ausgestaltung ist das zweite Teil relativ zum ersten Teil drehbar angeordnet
oder das zweite Teil ist relativ zum ersten Teil in Richtung des langgestreckt verlegten Lichtleiters bewegbar. Von Vorteil ist dabei, dass der Lichtleiter linear verlegbar oder kreisförmig verlegbar ist.

**Langgestreckt bedeutet hierbei, dass der Lichtleiter sich über eine große Länge erstreckt. Dies beinhaltet nicht nur Erstrecken entlang einer geraden Kurve, sondern auch entlang einer Kreisbahn, deren Durchmesser im Vergleich zum Durchmesser des Lichtleiters, also Durchmesser des Leitungsquerschnitts des Lichtleiters, viel größer ist, insbesondere also mindestens ein Hundert mal größer. "Langgestreckt verlegt" kann also auch "entlang einer Kreisbahn verlegt" bedeuten.**

Bei einer vorteilhaften Ausgestaltung ist das zweite Teil ein fahrerloses Transportsystem. Von Vorteil ist dabei, dass das zweite Teil als automatisch geführtes Fahrzeug realisierbar ist.

Bei einer vorteilhaften Ausgestaltung ist die Oberfläche des Lichtleiters aufgeraut. Von Vorteil ist dabei, dass abhängig vom Aufrauungsgrad die Intensität des seitlich abgestrahlten Lichts bestimmbar ist.

Bei einer vorteilhaften Ausgestaltung weisen die Sensoren jeweils zumindest eine Fotodiode auf. Von Vorteil ist dabei, dass das von der steuerbaren Lichtquelle modulierte Licht in einfacher Weise detektierbar ist.

Bei einer vorteilhaften Ausgestaltung ist die Normale der das erste Polarisationsfilter aufnehmenden Ebene senkrecht ausgerichtet zur Polarisationsrichtung des ersten Polarisationsfilters. Von Vorteil ist dabei, dass die Polarisationsrichtung des ersten Polarisationsfilters fest ausgerichtet ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert Beispiele oder Ausführungen in der Beschreibung, die nicht unter den Schutzumfang des unabhängigen Anspruchs fallen, sind als Beispiele auszulegen, die für das Verständnis der in dem unabhängigen Anspruch dargelegten Erfindung nützlich sind.

In der Figur 1 ist der stationäre Teil eines erfindungsgemäßen Systems mit seitlich leuchtendem Lichtleiter 2 schematisch skizziert.

In der Figur 2 ist ein erfindungsgemäßes System mit stationärem Teil und insbesondere translatorisch bewegbaren Mobilteilen 23 schematisch skizziert.

In der Figur 3 ist ein rotatorisches System schematisch skizziert.

In der Figur 4 ist der stationäre Teil eines erfindungsgemäßen Systems mit seitlich leuchtendem Lichtleiter 2 schematisch skizziert, wobei der Lichtleiter 2 zumindest teilweise von einem Gitter 40 abgedeckt ist.

In der Figur 5 ist zusätzlich zu dem in Figur 2 gezeigten System ein Gitter 40 zur zumindest teilweise Abdeckung des seitlich leuchtenden Lichtleiters 2 dargestellt.

In der Figur 6 ist ein Drehübertrager 30 dargestellt, dessen stationärer Teil wiederum einen im Wesentlichen kreisförmig verlegten Lichtleiter 2 mit Gitter 40 zur zumindest teilweisen Abdeckung gezeigt, wobei am relativ zum stationären Teil drehbaren Teil lichtempfindliche Sensoren zum Datenempfang und zur Positionsbestimmung angeordnet sind.

In der Figur 7 ist als Gitter 40 für den Drehübertrager 30 ein Polarisationsfilter 70 schematisch dargestellt.

In der Figur 8 ist ein Drehübertrager 30 schematisch dargestellt, wobei am stationären Teil ein Polarisationsfilter 70 angeordnet ist und am relativ zum stationären Teil drehbaren Teil Wiederum ein lichtempfindlicher Sensor 26 zum Datenempfang und mit von jeweils zueinander verdrehter Polarisationsfolie abgedeckt angeordneten lichtempfindlichen Sensoren (60), insbesondere Photodioden.

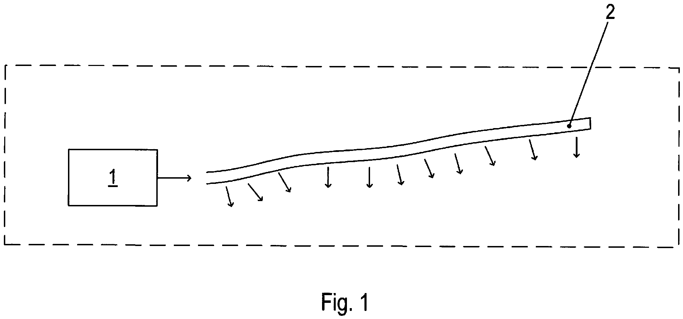

Wie in Figur 1 gezeigt, wird das von einer Lichtquelle 1 in einen Lichtleiter 2 eingestrahlte Licht seitlich abstrahlbar, wenn die Oberfläche des Lichtleiters 2 aufgeraut wird und somit die an der inneren Oberfläche stattfindende Reflexion, insbesondere Totalreflexion, der im Lichtleiter 2 geleiteten Lichtstrahlen reduziert ist. Das seitliche Abstrahlen ist mittels der Pfeile dargestellt.

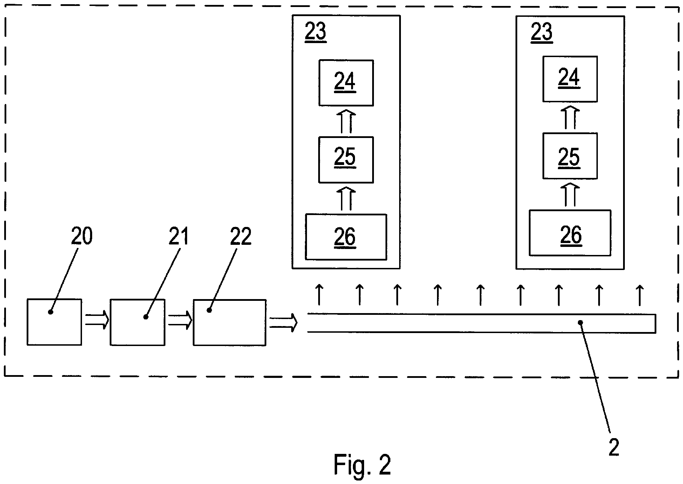

Wie in Figur 2 gezeigt, ist der seitlich leuchtende Lichtleiter langgestreckt in einer Anlage bewegbar, wobei sich entlang des Lichtleiters Mobilteile 23 bewegen.

Wiederum werden die von einer Datenquelle 20, insbesondere übergeordnete Steuerung, gesendeten Daten über ein Modem 21 der Lichtquelle 22 zugeführt, so dass diese Lichtquelle 22 entsprechend moduliertes Licht in den Lichtleiter 2 einleitet, so dass dieses modulierte Licht dann seitlich vom Lichtleiter 2 aussendet.

Die entlang des Lichtleiters 2 bewegbaren Mobilteile 23 weisen jeweils einen lichtempfindlichen Sensor, insbesondere Lichtempfänger 26, auf, dessen Sensorsignale einem Modem 24 zugeleitet werden, welches die Daten demoduliert und/oder decodiert, so dass die Daten einer Datensenke 24 zuleitbar sind. Als Datensenke 24 ist beispielhaft die Steuerung des Mobilteils 23 vorsehbar. Somit sind also Daten berührungslos mittels seitlich vom Lichtleiter 2 abgestrahltem Licht übertragbar von einer zentralen Steuerung der Anlage zur Steuerung des Mobilteils 23.

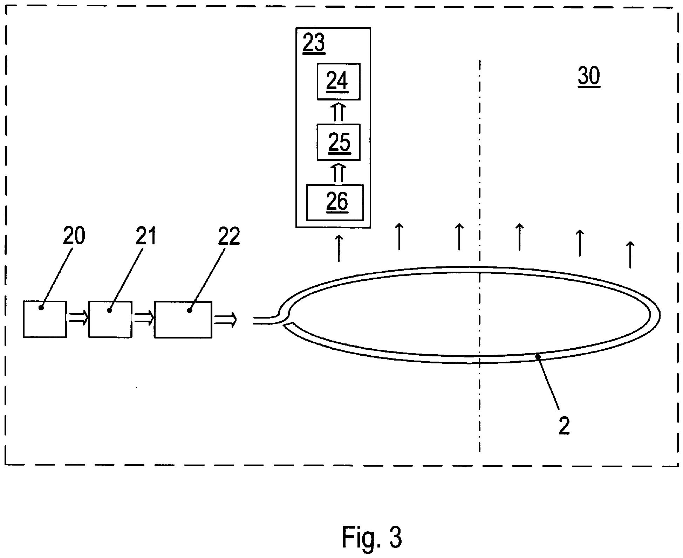

Wie in Figur 3 dargestellt, werden wiederum von einer Datenquelle 20, insbesondere übergeordnete Steuerung, Daten über ein Modem 21 der Lichtquelle 22 zugeführt, so dass diese Lichtquelle 22 entsprechend moduliertes Licht in den Lichtleiter 2 einleitet, wobei dieses modulierte Licht dann seitlich vom Lichtleiter 2 ausgesendet wird.

Auf dem zu dem stationär angeordneten Teil, welches die Lichtquelle 22, das Modem 21 und die Datenquelle 20 umfasst, drehbar gelagerten Teil 23 des Drehübertragers 30 ist ein Lichtempfänger 26, also ein lichtsensitiver Sensor, angeordnet, welcher das vom Lichtleiter 2 seitlich abgestrahlte Licht detektiert. Die Lichtempfänger 26 erzeugten Sensorsignale werden dem Modem 25 zugeführt, das den daraus decodierten Datenstrom der Datensenke 24 zuführt. Als Datensenke 24 fungiert hierbei eine auf dem Teil 23 angeordnete Signalelektronik. Mittels des modulierten Lichts ist somit eine berührungslose Informationsübertragung zum drehbar gelagerten Teil ermöglicht.

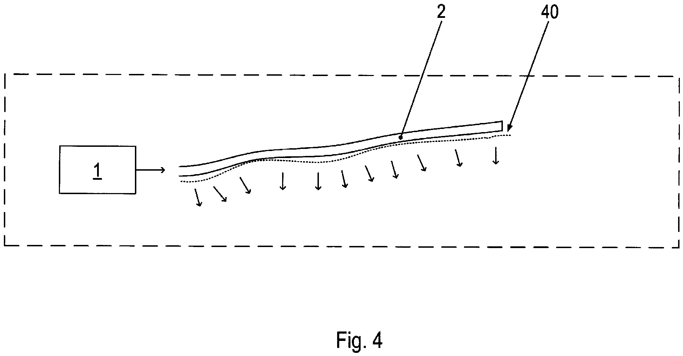

Wie in Figur 4 dargestellt, dargestellt, ist der seitlich abstrahlende Lichtleiter 2 mit einem Gitter 40 zumindest teilweise abgedeckt. Somit ist die seitliche Abstrahlung entlang des Lichtleiters 2 gemäß der Anordnung der Gitteröffnungen unregelmäßig und ist zur Codierung von Positionsinformation verwendbar. Bei Ausführung des Gitters 40 als Polarisationsgitter tritt polarisiertes Licht aus, so dass die Verdrehung des Mobilteils 23 gegen die Polarisationsebene bestimmbar ist. Auch eine Kombination des Gitteröffnungen aufweisenden Gitters 40 zusammen mit dem daran angeordneten Polarisationsgitter 40 ist ausführbar, so dass das Mobilteil 23 einerseits seine Verdrehung gegen die Polarisationsebene und andererseits die Position entlang der durch den Lichtleiter definierten Bahnkurve bestimmbar ist. Dabei sind die Gitteröffnungen entlang des Lichtleiters vorzugsweise regelmäßig voneinander beabstandet. Die Polarisationsfolie ist dabei derart angeordnet, dass die Polarisationsebene entlang des Lichtleiters im Wesentlichen transversal zum Lichtleiter ausgerichtet ist. Alternativ ist auch eine longitudinale Polarisationsrichtung, also eine zum Lichtleiter parallele Polarisationsrichtung, verwendbar.

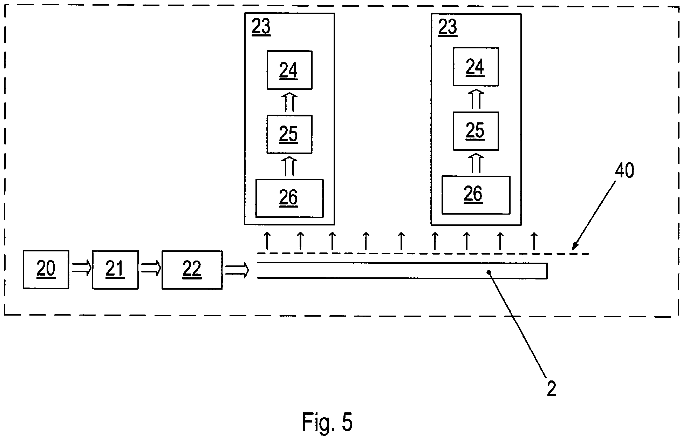

Wie in Figur 5 dargestellt, werden wiederum die von der Datenquelle 20 an ein Modem 21 übertragenen Daten als Modulationssignale der Lichtquelle 22 zugeführt, die dann das entsprechend modulierte Licht in den Lichtleiter 2 einspeist, welcher dieses weiterleitet und seitlich abstrahlt durch das oder die Gitter 40 hindurch. Als Gitter 40 ist hierbei wiederum ein Polarisationsgitter vorgesehen oder ein Gitter, dessen Gitteröffnungen die Position bestimmbar machen - zumindest relativ, also durch Abzählen der Gitteröffnungen während der Bewegung entlang des Lichtleiters 2.

In Figur 5 sind zwei Mobilteile 23 gezeigt, welche entlang des Lichtleiters 2 bewegbar sind. Somit sind mehrere Mobilteile 23 mit Daten aus der Datenquelle 20 versorgbar. Jedes der Mobilteile 23 weist einen Lichtempfänger 26 auf, also einen lichtintensitätsempfindlichen Sensor. Das Ausgangssignal, also Sensorsignal, des Sensors 26 wird einem Modem 25 zugeführt, dessen decodierter Datenstrom einer Datensenke 24 zugeführt wird, insbesondere also einer als Steuerung fungierenden Signalelektronik des Mobilteils 23.

Bei der Fahrt entlang des Lichtleiters 2 schwankt die Intensität des vom Sensor 26 empfangenen Lichts entsprechend der Abfolge der Gitteröffnungen des Gitters 40. Somit ist auf diese Weise die Position relativ zu einer Anfangsposition bestimmbar. Durch die Demodulation des empfangenen modulierten Lichts sind, insbesondere sind zeitlich überschneidend, Daten empfangbar.

Bei zusätzlich vorhandenem Polarisationsfilter ist noch der Verdrehwinkel des jeweiligen Mobilteils 23 relativ zur Polarisationsebene des Polarisationsfilters bestimmbar.

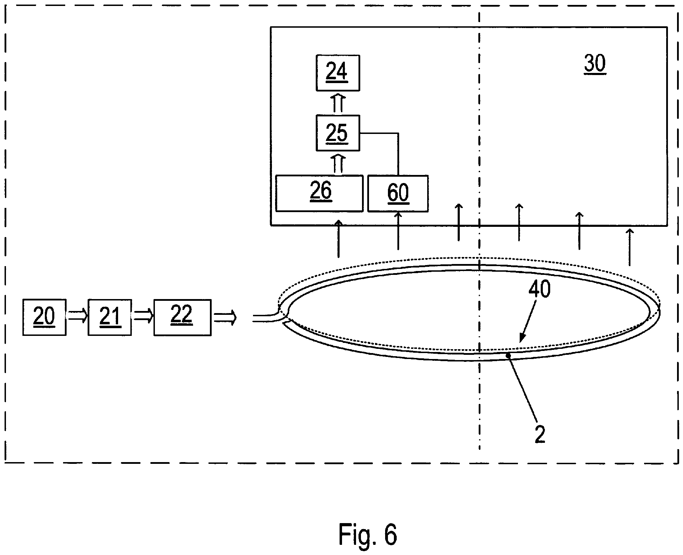

Wie in Figur 6 gezeigt, ist auch ein Vorsehen eines lichtempfindlichen Sensors 26, wie bei Figur 5 zum Datenempfang ausführbar und zusätzlich Fotodioden 60, insbesondere eine erste Fotodiode und eine zweite Fotodiode, wobei die Fotodioden derart in Richtung des Linienleiters versetzt zueinander angeordnet sind, dass bei Fahrt des Mobilteils 23 mit konstanter Geschwindigkeit die Signale der beiden Fotodioden gleichförmig verlaufen, wobei ein Phasenversatz von 90° relativ zueinander auftritt. Somit ist eine genaue Positionsbestimmung ermöglicht.

Das in Figur 6 am Lichtleiter 2 angeordneten Gitter 40 ist vorzugsweise ringförmig ausgeführt.

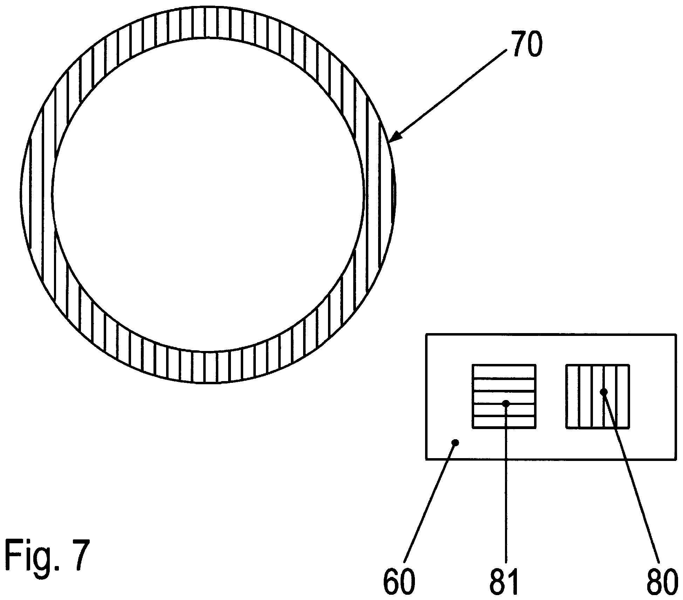

Wie in Figur 7 gezeigt, ist dieses Gitter 40 durch ein ebenfalls ringförmiges Gitter 70 ersetzbar, welches aus Polarisationsfolie gefertigt ist. Dabei ist die Polarisationsebene der so hergestellten Polarisationsfolie 70, also des ersten Polarisationsfilters 70, überall parallel zur Drehachse ausgerichtet. Somit wird von dem stationären Teil aus dem Lichtleiter Licht seitlich abgestrahlt, das insgesamt eine einzige Polarisationsrichtung aufweist.

Auf dem drehbar gelagerten Teil hingegen ist vor der oben genannten ersten Fotodiode eine erste Polarisationsfolie 80, also eine zweites Polarisationsfilter 80, angeordnet und vor der zweiten Fotodiode eine zweite Polarisationsfolie 81, also ein drittes Polarisationsfilter 80, angeordnet, wobei die Polarisationsebene der ersten Polarisationsfolie 80, also auch die zugehörige Polarisationsrichtung, verdreht ist um einen Winkel, insbesondere beispielhaft 90°, relativ zu der Polarisationsebene der zweiten Polarisationsfolie 81, also auch zu der zugehörigen Polarisationsrichtung. Die erste und zweite Polarisationsfolie (80, 81) sind jeweils eben angeordnet, wobei diese beiden Ebenen nicht nur parallel zu einander, sondern auch zu derjenigen Ebene sind, in welcher die Polarisationsfolie 70 angeordnet ist.

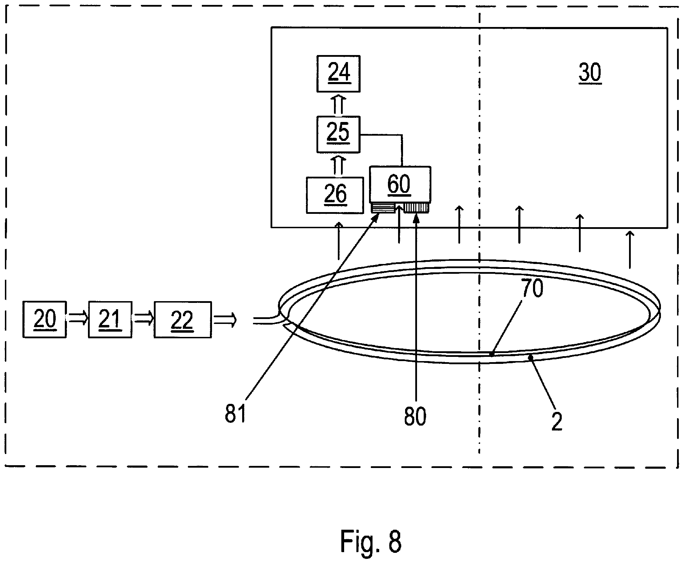

Wie in Figur 8 gezeigt, ist somit abhängig vom Drehwinkel des drehbaren Teils relativ zum stationären Teil ein entsprechendes Verhältnis der von den beiden Fotodioden 60 detektierten Lichtintensitäten erhältlich. Daraus lässt sich der Drehwinkel bestimmen - eineindeutig zumindest in einem Umfangswinkelbereich von 180°. Vorzugsweise wird während der Drehbewegung des drehbaren Teils auch der Verlauf und/oder die Veränderung der Lichtintensitäten bestimmt und somit die Winkelposition eineindeutig bestimmt - zumindest relativ zu einer Anfangswinkelposition.

Der Verlauf der von den beiden Winkelsensoren 60 bestimmten Lichtintensitäten bei gleichförmiger Drehbewegung des drehbaren Teils relativ zum stationären Teil weist einen Phasenversatz von 90° zueinander auf.

### Bezugszeichenliste

1 Lichtquelle
2 seitlich leuchtender Lichtleiter
20 Datenquelle
21 Modem
22 Lichtsender
23 Mobilteil
24 Datensenke
25 Modem
26 Lichtempfänger
30 Drehübertrager
40 Gitter, insbesondere Polarisationsfilter oder positionskodiertes Gitter
60 Fotodioden, insbesondere erste Photodiode und zweite Fotodiode
70 Polarisationsfilter
80 zweites Polarisationsfilter
81 drittes Polarisationsfilter

## Patentansprüche

1. System **zur Datenübertragung und Positionsbestimmung,**
**wobei das System** ein erstes Teil und ein zweites Teil **umfasst,**
wobei das zweite Teil zum ersten Teil relativ bewegbar ist,
**wobei** das erste Teil einen seitlich Licht abstrahlenden Lichtleiter (2) und eine steuerbare Lichtquelle (22) aufweist,
wobei das zweite Teil zumindest eine Sensoranordnung (26) zur Detektion der Lichtintensität **aufweist,**
**dadurch gekennzeichnet, dass**
**das erste Teil ein Gitter** (40) zur Codierung von Positionsinformationen **aufweist, welches zwischen der Sensoranordnung und dem Lichtleiter angeordnet ist,**
wobei die Sensoranordnung bei dem Bewegen des zweiten Teils relativ zum ersten Teil entlang des Lichtleiters bewegt wird,
so dass seitlich aus dem Lichtleiter abgestrahltes Licht auf die Sensoranordnung trifft,
wobei das in den Lichtleiter eingestrahlte Licht von der steuerbaren Lichtquelle erzeugt wird, und die steuerbare Lichtquelle konfiguriert ist, die Intensität des in den Lichtleiter eingestrahlten Lichts gemäß einem von einer Datenquelle erzeugten Datenstroms zu modulieren.

2. System nach Anspruch 1,
**dadurch gekennzeichnet, dass**
das Gitter in Erstreckungsrichtung des Lichtleiters insbesondere voneinander regelmäßig beabstandete Gitteröffnungen aufweist und/oder das Gitter ein erstes Polarisationsfilter aufweist, so dass das aus dem Gitter austretende, zur Sensoranordnung abgestrahlte Licht polarisiert ist, insbesondere eine einzige Polarisationsrichtung aufweist.

3. System nach Anspruch 2, **dadurch gekennzeichnet, dass**
die Sensoranordnung einen ersten Sensor zur Bestimmung der Lichtintensität und einen zweiten Sensor zur Bestimmung der Lichtintensität aufweist,
wobei zwischen dem ersten Sensor und dem Gitter am zweiten Teil ein zweites Polarisationsfilter angeordnet ist,
wobei zwischen dem zweiten Sensor und dem Gitter am zweiten Teil ein drittes Polarisationsfilter angeordnet ist,
wobei die Polarisationsrichtung des zweiten Polarisationsfilters einen nicht verschwindenden Verdrehwinkel zur Polarisationsrichtung des dritten Polarisationsfilters aufweist, insbesondere einen Verdrehwinkel von 90°.

4. System nach Anspruch 3,
**dadurch gekennzeichnet, dass**
das erste, zweite und dritte Polarisationsfilter eben ausgeführt ist und die das erste, zweite und dritte Polarisationsfilter aufnehmenden Ebenen parallel zueinander ausgerichtet sind.

5. System nach Anspruch 3,
**dadurch gekennzeichnet, dass**
die Sensoranordnung zusätzlich zu dem ersten und zweiten Sensor einen dritten Sensor zur Bestimmung der Lichtintensität aufweist,
wobei zwischen dem Lichtleiter und dem dritten Sensor kein Polarisationsfilter angeordnet ist.

6. System nach Anspruch 5, **dadurch gekennzeichnet, dass**
das vom dritten Sensor erzeugte Sensorsignal demoduliert wird von einer Auswerteeinheit, insbesondere von einem Modem, und einer Datensenke, insbesondere Signalelektronik, insbesondere Steuerung, des zweiten Teils zugeführt wird.

7. System nach mindestens einem der vorangegangenen Ansprüche,
**dadurch gekennzeichnet, dass**
das zweite Teil relativ zum ersten Teil drehbar angeordnet
oder dass das zweite Teil relativ zum ersten Teil in Richtung des langgestreckt verlegten Lichtleiters bewegbar ist, **insbesondere auf einer Kreisbahn, deren Durchmesser mindestens hundertmal größer als der Querschnittsdurchmesser des Lichtleiters ist.**

8. System nach mindestens einem der vorangegangenen Ansprüche,
**dadurch gekennzeichnet, dass**
das zweite Teil ein fahrerloses Transportsystem ist.

9. System nach mindestens einem der vorangegangenen Ansprüche,
**dadurch gekennzeichnet, dass**
die Oberfläche des Lichtleiters aufgeraut ist.

10. System nach mindestens einem der vorangegangenen Ansprüche,
**dadurch gekennzeichnet, dass**
die Sensoren jeweils zumindest eine Fotodiode aufweisen.

11. System nach Anspruch 2,
**dadurch gekennzeichnet, dass**
die Normale der das erste Polarisationsfilter aufnehmenden Ebene senkrecht ausgerichtet ist zur Polarisationsrichtung des ersten Polarisationsfilters.

## Claims

1. A system for data transmission and position determination,
wherein the system comprises a first part and a second part,
wherein the second part is movable relative to the first part,
wherein the first part has a light guide (2) radiating light laterally and a controllable light source (22),
wherein the second part has at least one sensor arrangement (26) for detection of the light intensity,
**characterised in that**
the first part has a grating (40) for the coding of positional information, which is arranged between the sensor arrangement and the light guide,
wherein the sensor arrangement is moved along the light guide upon movement of the second part relative to the first part,
so that light radiated laterally from the light guide strikes the sensor arrangement, wherein the light radiated into the light guide is produced by the controllable light source, and the controllable light source is configured to modulate the intensity of the light radiated into the light guide according to a data flow produced by a data source.

2. A system according to claim 1,
**characterised in that**
the grating has grating openings spaced apart in the extension direction of the light guide, in particular regularly spaced apart from one another, and/or the grating has a first polarisation filter, so that the light issuing from the grating and radiated towards the sensor arrangement is polarized, in particular has a single polarisation direction.

3. A system according to claim 2,
**characterised in that**
the sensor arrangement has a first sensor for determining the light intensity and a second sensor for determining the light intensity,
wherein between the first sensor and the grating, a second polaristation filter is arranged at the second part,
wherein between the second sensor and the grating, a third polarisation filter is arranged at the second part,
wherein the polarisation direction of the second polarisation filter has a not insignificant angle of rotation with respect to the polarisation direction of the third polarisation filter, in particular an angle of rotation of 90°.

4. A system according to claim 3,
**characterised in that**
the first, second and third polarisation filters are plane and the planes receiving the first, second and third polarisation filters are oriented parallel to one another.

5. A system according to claim 3,
**characterised in that**
in addition to the first and second sensor, the sensor arrangement has a third sensor for determining the light intensity,
wherein there is not a polarisation filter arranged between the light guide and the third sensor.

6. A system according to claim 5,
**characterised in that**
the sensor signal produced by the third sensor is demodulated by an evaluation unit, in particular by a modem, and is supplied to a data sink, in particular signal electronics, in particular control means, of the second part.

7. A system according to at least one of the preceding claims,
**characterised in that**
the second part is rotatably arranged relative to the first part
or **in that** the second part is movable relative to the first part in the direction of the light guide run in an elongated manner, in particular is movable on a circular path whose diameter is at least one hundred times greater that the cross-sectional diameter of the light guide.

8. A system according to at least one of the preceding claims,
**characterised in that**
the second part is a driverless transport system.

9. A system according to at least one of the preceding claims,
**characterised in that**
the surface of the light guide is roughened.

10. A system according to at least one of the preceding claims,
**characterised in that**
the sensors each have at least one photodiode.

11. A system according to claim 2,
**characterised in that**
the normal of the plane receiving the first polarisation filter is oriented perpendicularly to the polarisation direction of the first polarisation filter.

## Revendications

1. Système de transmission de données et de détermination de position,
le système comprenant une première partie et une deuxième partie,
la deuxième partie étant relativement mobile par rapport à la première partie,
la première partie comportant un guide de lumière (2) émettant de la lumière latéralement et une source de lumière (22) pouvant être commandée,
la deuxième partie comportant au moins un ensemble de capteurs (26) destiné à détecter l'intensité lumineuse, **caractérisé en ce que**
la première partie comporte une grille (40) destinée à coder des informations de position et disposée entre l'ensemble de capteurs et le guide de lumière,
l'ensemble de capteurs étant déplacé par rapport à la première partie le long du guide de lumière lorsque la deuxième partie est déplacée de sorte que la lumière émise latéralement par le guide de lumière est incidente à l'ensemble de capteurs,
la lumière injectée dans le guide de lumière étant générée par une source de lumière pouvant être commandée, et la source de lumière pouvant être commandée étant conçue pour moduler l'intensité de la lumière injectée dans le guide de lumière en fonction d'un flux de données généré par une source de données.

2. Système selon la revendication 1,
**caractérisé en ce que**
la grille comporte en particulier des ouvertures de grille régulièrement espacées les unes des autres dans la direction d'extension du guide de lumière et/ou la grille comporte un premier filtre de polarisation de sorte que la lumière sortant de la grille et émise vers l'ensemble de capteurs soit polarisée, en particulier elle comporte une seule direction de polarisation.

3. Système selon la revendication 2,
**caractérisé en ce que**
l'ensemble de capteurs comporte un premier capteur destiné à déterminer l'intensité lumineuse et un deuxième capteur destiné à déterminer l'intensité lumineuse,
un deuxième filtre de polarisation étant disposé entre le premier capteur et la grille au niveau de la deuxième partie,
un troisième filtre de polarisation étant disposé entre le deuxième capteur et la grille au niveau de la deuxième partie,
la direction de polarisation du deuxième filtre de polarisation formant un angle de torsion non négligeable par rapport à la direction de polarisation du troisième filtre de polarisation, en particulier un angle de torsion de 90°.

4. Système selon la revendication 3,
**caractérisé en ce que**
les premier, deuxième et troisième filtres de polarisation sont plans et les plans contenant les premier, deuxième et troisième filtres de polarisation sont orientés parallèlement les uns aux autres.

5. Système selon la revendication 3,
**caractérisé en ce que**
l'ensemble de capteurs comporte, en plus des premier et deuxième capteurs, un troisième capteur destiné à déterminer l'intensité lumineuse,
aucun filtre de polarisation n'étant disposé entre le guide de lumière et le troisième capteur.

6. Système selon la revendication 5,
**caractérisé en ce que**
le signal de capteur généré par le troisième capteur est démodulé par une unité d'évaluation, notamment est amené par un modem, et un collecteur de données, en particulier d'une électronique de signal, en particulier d'une commande, de la deuxième partie.

7. Système selon l'une au moins des revendications précédentes,
**caractérisé en ce que**
la deuxième partie est disposée de manière rotative par rapport à la première partie
ou **en ce que** la deuxième partie est mobile par rapport à la première partie en direction du guide de lumière placé allongé, notamment sur un trajet circulaire dont le diamètre est au moins cent fois supérieur au diamètre en coupe transversal du guide de lumière.

8. Système selon l'une au moins des revendications précédentes,
**caractérisé en ce que**
la deuxième partie est un système de transport sans conducteur.

9. Système selon l'une au moins des revendications précédentes,
**caractérisé en ce que**
la surface du guide de lumière est rendue rugueuse.

10. Système selon l'une au moins des revendications précédentes,
**caractérisé en ce que**
les capteurs comportent chacun au moins une photodiode.

11. Système selon la revendication 2,
**caractérisé en ce que**
la normale au plan recevant le premier filtre de polarisation est orientée perpendiculairement à la direction de polarisation du premier filtre de polarisation.
